## Europäisches Patentamt

## European Patent Office

## Office européen des brevets

(19)

(11) Veröffentlichungsnummer: **0 087 077**
**A2**

(12) ## EUROPÄISCHE PATENTANMELDUNG

(21) Anmeldenummer: **83101291.9**

(22) Anmeldetag: **10.02.83**

(51) Int. Cl.³: **G 01 N 21/31**

(30) Priorität: **23.02.82 DE 3206427**

(43) Veröffentlichungstag der Anmeldung:
**31.08.83 Patentblatt 83/35**

(84) Benannte Vertragsstaaten:
**DE FR GB IT**

(71) Anmelder: **SIEMENS AKTIENGESELLSCHAFT**
**Berlin und München Wittelsbacherplatz 2**
**D-8000 München 2(DE)**

(72) Erfinder: **Seiberth, Hans-Jürgen, Dipl.-Phys.**
**Brucknerstrasse 11a**
**D-6729 Wörth(DE)**

(54) Messeinrichtung für die optische Gasanalyse.

(57) Bei einer entnahmefreien Meßeinrichtung für die optische Gasanalyse von n Komponenten eines Gasgemisches ist an einer das Gasgemisch enthaltenden Meßstrecke L einerseits ein IR-Strahler (3), andererseits ein fotoelektrischer Empfänger (6) mit einer die Zahl der Komponenten um Eins übersteigenden Anzahl von Meßkanälen zur Messung der Gesamtextinktionen bei mindestens einer Schwerpunktwellenlänge der Absorptionsbanden der n Komponenten angeordnet. In einer von den Ausgangssignalen der einzelnen Meßkanälen gespeisten Rechenschaltung (9) wird unter Zugrundelegung eines linearen Gleichungssystems von n + 1 Intensitätsbestimmungsgleichungen nach Lambert-Beer der Anteil der n Komponenten im Gasgemisch errechnet unter Berücksichtigung der während des Betriebs auftretenden Änderungen von Strahlerintensität $I_0$ und Empfängerempfindlichkeit S in der Form $I_0 \cdot S$ als n + 1. Unbekannte des Gleichungssystems. Damit wird es möglich, eine entnahmefreie Messung der Komponenten eines Gasgemischs ohne Vergleichsstrahlengang vornehmen zu können.

SIEMENS AKTIENGESELLSCHAFT
Berlin und München

Unser Zeichen
VPA 82 P 4409

**0087077**

Meßeinrichtung für die optische Gasanalyse

Die Erfindung bezieht sich auf eine Meßeinrichtung für die optische Gasanalyse von n Komponenten eines Gasgemisches (Meßgas) mit einem Strahler, einer das Meßgas enthaltenden Meßstrecke von der Länge L und einem fotoelektrischen Empfänger mit n Meßkanälen zur Messung der Gesamtextinktionen bei jeweils einer Schwerpunktwellenlänge i der Absorptionsbanden der n Komponenten und mit einer Rechenschaltung zur Ermittlung der spezifischen Extinktionen und daraus der Anteile der Komponenten am Meßgas mit Hilfe eines linearen Gleichungssystems von n Intensitätsbestimmungsgleichungen nach Lambert-Beer.

Eine derartige Meßeinrichtung ist beispielsweise aus der DE-AS 29 18 084 bekannt. Sie wird vorzugsweise zur entnahmefreien Abgasanalyse (in situ) eingesetzt, wozu in die Wände des Abgaskanals an zwei diametral gegenüberliegenden Stellen Fenster eingesetzt sind, die die Meßstrecke begrenzen. Bei einer Bauart der Meßeinrichtung sind Strahler und Empfänger hinter einem der Fenster angeordnet, wobei die ausgesandte Strahlung an einem hinter dem anderen Fenster angebrachten Retroreflektor reflektiert wird und somit die Meßstrecke zweimal durchläuft, bevor sie wieder, um den absorbierten Anteil vermindert, auf den Empfänger trifft. Bei dieser Anordnung ist es auf relativ einfache Weise möglich, einen Vergleichsstrahlengang abzuzweigen und von Zeit zu Zeit oder auch jeweils zwischen zwei Absorptionsmessungen einen Nullabgleich vorzunehmen, so daß das Driften der Strahlerintensität und der Empfängerempfindlichkeit bei der Meßwertbildung berücksichtigt werden kann.

Sp 4 Scl / 19.02.1982

0087077

Je nach Anwendungsfall kann es jedoch auch notwendig werden, den Strahler auf der einen Seite und den Empfänger auf der anderen Seite der Meßstrecke anzuordnen, der Aufbau eines Vergleichsstrahlengangs ist dann häufig nicht oder nur unter erheblichem Aufwand möglich.

Es besteht daher die Aufgabe, Mittel und Wege zu finden, um auch bei dieser Anordnung von Strahler und Empfänger den Einfluß der Änderung von Strahlerintensität und Empfängerempfindlichkeit auf das Meßergebnis auszuschalten.

Eine Lösung der Aufgabe bei einer Meßeinrichtung der eingangs genannten Art wird erfindungsgemäß darin gesehen, daß ein $n + 1$. Meßkanal mit einer von den übrigen $i = 1 \ldots n$ Schwerpunktwellenlängen verschiedenen Wellenlänge $i + 1$ vorgesehen ist und daß mit Hilfe des um eine $n + 1$. Gleichung erweiterten Gleichungssystem in der Rechenschaltung Änderungen von Strahlerintensität $I_0$ und Empfängerempfindlichkeit $S$ in den komponentenspezifischen Ausgangssignalen der Meßeinrichtung berücksichtigt sind.

Aus diesem Gleichungssystem können die unbekannten Konzentrationen der n Komponenten berechnet werden, wobei das Produkt $I_0 \cdot S$ als zusätzliche Unbekannte eingefügt und mit Hilfe der zusätzlichen linearen Gleichung, die ein Meßergebnis bei einer weiteren Wellenlänge enthält, bestimmt und bei der Berechnung der Konzentrationen aus den Extinktionen berücksichtigt wird. Der zusätzliche Rechenaufwand ist dabei gering.

Da bei dieser Meßeinrichtung keine optischen Bauteile mechanisch im Strahlengang bewegt werden müssen, um einen Vergleichsstrahl zu erhalten, kann diese Methode auch bei Meßeinrichtungen mit Strahler und Empfänger auf einer Seite und Retroreflektor auf der anderen Seite eingesetzt werden.

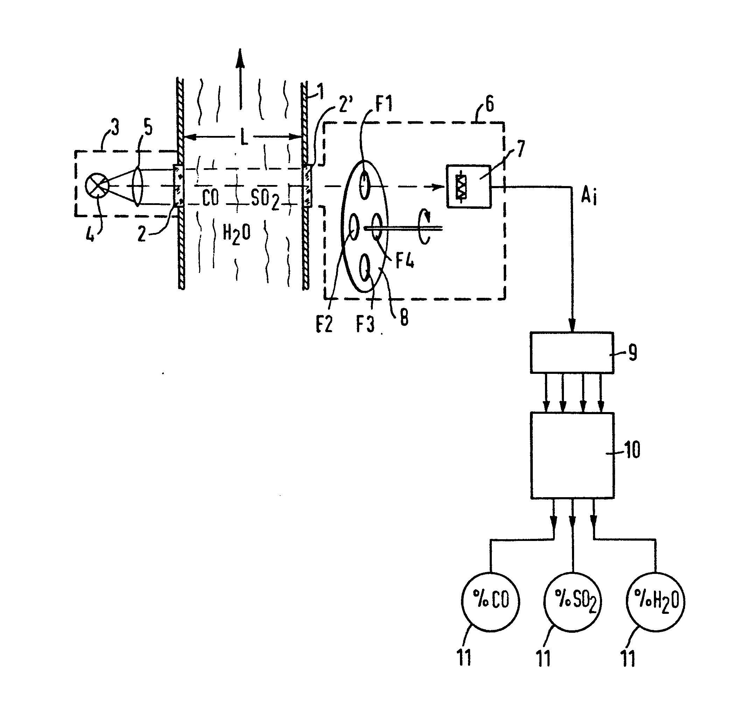

Das Funktionsprinzip der erfindungsgemäßen Meßeinrichtung wird anhand der schematischen Darstellung in der Figur im folgenden näher erläutert.

Ein Abgaskanal 1 wird von einem Gasgemisch durchströmt, das hier beispielsweise aus den drei Komponenten Kohlenoxyd CO, Schwefeldioxyd $SO_2$ und Wasserdampf $H_2O$ bestehe. Die quantitative Bestimmung der Komponenten wird mit Hilfe von Messungen spezifischer Absorptionen in dem Gasgemisch vorgenommen.

Um in situ messen zu können, sind dazu in den Wänden des gasführenden Kanals 1 diametral gegenüberliegend Fenster 2 und 2' angebracht, welche eine vom Meßgas durchströmte Meßstrecke von der Länge L begrenzen. Außerhalb des Kanals 1, hinter dem Fenster 2, ist ein Strahler 3 angeordnet, der aus einer breitbandig strahlenden Strahlungsquelle 4 und einem optischen System 5 zur Bündelung der abgegebenen Strahlung besteht.

Im Strahlengang hinter dem Fenster 2' ist der Empfänger 6 angeordnet, mit einem fotoelektrischen Detektor 7 und einer davorgeschalteten Filteranordnung, hier ein beispielsweise mit 6/sec rotierendes Filterrad 8 mit vier Filtern F1 bis F4, vorzugsweise Interferenzfiltern, die in schmalen Wellenlängenbereichen durchlässig sind und die in zyklischem Wechsel in den Strahlengang vor den Detektor 7 gebracht werden.

Die Ausgangssignale A des Empfängers 6 werden über einen Serien-Parallelumsetzer 9 einer Rechenschaltung 10 zugeführt, in welcher die Anteile der Gaskomponenten im Gasgemisch errechnet und in den Anzeigegeräten 11 angezeigt bzw. auf andere Weise ausgewertet werden.

Das Meßprinzip beruht auf der Bestimmung der Extinktionen in verschiedenen Absorptionswellenlängenbereichen der Gaskomponenten.

Nach Lambert-Beer gilt für die Absorption in einem Gas j bei einer bestimmten Wellenlänge i die Beziehung

$$I_i = I_0 \exp \left( -L \cdot \sum_{j=1}^{n} E_{ij} C_j \right)$$

wobei

$I_0$ die Strahlerintensität,

$I_i$ die Intensität nach Durchlaufen der Absorptionsstrecke L,

$E_{ij}$ der Extinktionskoeffizient des Gases j bei der
Wellenlänge i und

$C_j$ die Konzentration des Gases j

sind. In der Praxis ist i jeweils die Schwerpunktwellenlänge eines schmalen vom Filter durchgelassenen Wellenlängenbereiches, der in einer Absorptionsbande des betreffenden Gases j liegt.

Das Detektorausgangssignal $A_i$ ist mit der auf den Detektor auffallenden Strahlungsleistung $I_i$ durch die Detektorempfindlichkeit S verknüpft:

$$A_i = S \cdot I_i$$

entsprechend gilt

$$A_0 = S \cdot I_0$$

Die der Strahlungsschwächung in den einzelnen Wellenlängenbereichen i proportionalen Detektorausgangssignale $A_i$
lassen sich durch die Bestimmungsgleichung in der Form

$$\ln A_i = \ln A_0 - L \cdot \sum_{j=1}^{n} E_{ij} \cdot C_j$$

darstellen, wobei $A_0$ das Empfängerausgangssignal bei der
Extinktion Null ist.

In dem angeführten Beispiel weist das in dem Meßgaskanal 1 strömende Gasgemisch drei Komponenten auf (j = 3).
Es wird in drei Meßkanälen bei jeweils einer gasspezifischen Absorptionswellenlänge i die jeweilige Gesamtabsorption bzw. Extinktion gemessen, somit ist i = n = j = 3.

**0087077**

Zur Bestimmung der Konzentrationen der einzelnen Komponenten wird in bekannter Weise ein lineares Gleichungssystem mit drei Gleichungen eingesetzt.

Um jedoch den Einfluß von Änderungen der Strahlerintensität $I_0$ und der Empfängerempfindlichkeit S mit zu berücksichtigen, wird das Gleichungssystem um eine weitere Beziehung vermehrt.

Somit ergibt sich:

$$\ln A_1(CO) = L (E_{10} \cdot C_1 + E_{20} \cdot C_2 + E_{30} \cdot C_3) + \ln (I_0 \cdot S)$$
$$\ln A_2(SO_2) = L (E_{11} \cdot C_1 + E_{21} \cdot C_2 + E_{31} \cdot C_3) + \ln (I_0 \cdot S)$$
$$\ln A_3(H_2O) = L (E_{12} \cdot C_1 + E_{22} \cdot C_2 + E_{32} \cdot C_3) + \ln (I_0 \cdot S)$$
$$\ln A_4(H_2O') = L (E_{13} \cdot C_1 + E_{23} \cdot C_2 + E_{33} \cdot C_3) + \ln (I_0 \cdot S)$$

Wie aus dem angegebenen Gleichungssystem erkennbar, wird die n + 1. Messung bei einem zweiten Wellenlängenbereich einer der Komponenten vorgenommen und angesetzt, hier bei Wasserdampf $H_2O'$.

Die Messungen werden bevorzugt im infraroten Spektralbereich vorgenommen.

Die Schwerpunktwellenlängen i, bei denen gemessen wird, sind beispielsweise für

| | | |
|---|---|---|
| CO | 4660 | nm |
| $SO_2$ | 3950 | nm |
| $H_2O$ | 3220 | nm |
| $H_2O'$ | 5050 | nm |

Mit dem Gleichungssystem lassen sich in der Rechenschaltung aus den seriell ausgegebenen Empfängerausgangssignalen $A_1$ bis $A_4$ die Konzentrationen $C_1$ bis $C_3$ der Gaskomponenten sowie das Produkt $I_0 \cdot S$ errechnen.

2 Patentansprüche

1 Figur

**0087077**

<u>Patentansprüche</u>

1. Meßeinrichtung für die optische Gasanalyse von n Komponenten eines Gasgemisches (Meßgas) mit einem Strahler, einer das Meßgas enthaltenden Meßstrecke von der Länge L und einem fotoelektrischen Empfänger mit n Meßkanälen zur Messung der Gesamtextinktionen bei jeweils einer Schwerpunktwellenlänge i der Absorptionsbanden der n Komponenten und mit einer Rechenschaltung zur Ermittlung der spezifischen Extinktionen und daraus der Anteile der Komponenten im Meßgas mit Hilfe eines linearen Gleichungssystems von n Intensitätsbestimmungsgleichungen nach Lambert-Beer, d a d u r c h   g e k e n n z e i c h n e t , daß ein n + 1. Meßkanal mit einer von den übrigen i = 1 ... n Schwerpunktswellenlängen verschiedenen Wellenlänge i + 1 vorgesehen ist und daß mit Hilfe des um eine n + 1. Gleichung erweiterten Gleichungssystems in der Rechenschaltung (9) Änderungen von Strahlerintensität $I_0$ und Empfängerempfindlichkeit S in den komponentenspezifischen Ausgangssignalen der Meßeinrichtung berücksichtigt sind.

2. Meßeinrichtung nach Anspruch 1, d a d u r c h   g e -  k e n n z e i c h n e t , daß in den n + 1 Meßkanälen Interferenzfilter vorgesehen sind, deren Durchlaßwellenlängen im infraroten Spektralbereich liegen.